# FASCICULE DE BREVET EUROPEEN

(11) **EP 2 142 430 B1**
(45) Date de publication et mention de la délivrance du brevet: **02.03.2011**
(21) Numéro de dépôt: 08736388.3
(22) Date de dépôt: 18.04.2008
(51) Int. Cl.: B64D 27/26

(54) **DISPOSITIF D'ACCROCHAGE DE MOTEUR D'AERONEF ET AERONEF COMPORTANT AU MOINS UN TEL DISPOSITIF**
BEFESTIGUNGSVORRICHTUNG FÜR FLUGZEUGTRIEBWERK UND MINDESTENS EINE SOLCHE VORRICHTUNG ENTHALTENDES FLUGZEUG
AIRCRAFT ENGINE MOUNTING DEVICE AND AIRCRAFT INCLUDING AT LEAST ONE SUCH DEVICE

(30) Priorité: 20.04.2007 FR 0754618
(43) Date de publication de la demande: 13.01.2010
(73) Titulaire: AIRBUS OPERATIONS, 31060 Toulouse (FR)
(72) Inventeur: COMBES, Stéphane, F-31660 Buzet sur Tarn (FR); ROVATTI, Didier, F-31400 Toulouse (FR)
(74) Mandataire: Ilgart, Jean-Christophe
(86) Numéro de dépôt international: PCT/EP2008/054743
(87) Numéro de publication internationale: WO 2008/135366

(56) Documents cités:
- EP-A- 0 564 126
- FR-A- 2 217 549
- GB-A- 2 010 969

## Description

### DOMAINE TECHNIQUE ET ART ANTÉRIEUR

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais «Engine Mounting Structure»), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

Un tel dispositif d'accrochage est en effet prévu pour former l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, dite structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part au carter du turbomoteur, et d'autre part rapportées sur un palonnier, lui-même articulé sur la structure rigide du dispositif d'accrochage.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, les solutions proposées antérieurement prévoient que le dispositif de reprise des efforts de poussée intègre un palonnier articulé sur la structure rigide, par l'intermédiaire d'un axe de liaison. A ce titre, il est indiqué que pour assurer une fonction dite « Fail Safe » pour la transmission des efforts selon la direction longitudinale, le palonnier est habituellement réalisé à l'aide de deux ferrures superposées, de même que l'axe de liaison prend, quant à lui, la forme d'un axe doublé. Ainsi, en cas de rupture de l'une des deux ferrures superposées constituant le palonnier, c'est l'autre qui assure seule la reprise des efforts provenant des bielles latérales, et, en cas de rupture de l'axe extérieur de l'axe de liaison doublé, c'est alors l'axe intérieur qui prend le relais pour la reprise et la transmission de ces mêmes efforts selon la direction longitudinale.

Il est connu des dispositifs d'accrochage dans lesquels l'attache arrière et le dispositif de reprise des efforts sont distincts et décalés longitudinalement. L'accrochage du moteur au longeron inférieur du caisson s'effectue au moyen d'un axe solidaire du moteur et traversant le longeron. Cet axe est généralement incliné par rapport à la verticale. Cette inclinaison rend le montage complexe et impose d'utiliser un outillage particulier pour permettre une telle fixation.

Par ailleurs, certains moteurs d'aéronefs ont des diamètres extérieurs relativement importants par rapport aux diamètres classiques des moteurs, ce qui impose de rapprocher le moteur au plus prêt de la voilure afin de réduire les impacts de garde au sol. Ce rapprochement limite alors la possibilité d'utilisation d'outillages spéciaux.

L'arrière-plan technologique est illustré par le document EP-A- 0 564 126.

C'est par conséquent un but de la présente invention d'offrir un dispositif d'accrochage, comportant un dispositif de reprise des efforts permettant un montage simple et rapproché du moteur sur le caisson.

### EXPOSÉ DE L'INVENTION

Le but précédemment énoncé est atteint par un dispositif d'accrochage de moteur pour aéronef comportant un dispositif de reprise des efforts de poussée comportant une partie fixée sur le caisson et une partie montée sur le moteur, la liaison mécanique entre la première et la deuxième partie étant obtenue par un brochage latéral par rapport au plan moyen de reprise des efforts,

Le dispositif de reprise des efforts comporte deux bielles de reprise des efforts reliées mécaniquement à un palonnier. Par exemple, le palonnier est relié mécaniquement à une ferrure intermédiaire due palonnier, et chaque bielle est reliée mécaniquement à une ferrure intermédiaire de bielle. La ferrure intermédiaire de palonnier est liée mécaniquement à une ferrure principale fixée sur le caisson au moyen d'un axe monté latéralement par rapport à l'axe de reprise des efforts, et les ferrures intermédiaire de bielles sont liées mécaniquement à des ferrures supplémentaires fixées sur le caisson au moyen d'axes montés latéralement par rapport à l'axe de reprise des efforts.

Le montage latéral des axes permet d'éviter le recours à un outillage spécial. Par ailleurs, la présente invention permet le hissage par déplacement vertical du moteur comportant les bielles et le palonnier. En outre, la ferrure principale et les ferrures supplémentaires s'emboîtent dans les ferrures respectives fixées sur le caisson. Ainsi le moteur peut être monté au plus prés du caisson et donc de la voilure.

Le montage selon la présente invention comporte alors notamment les étapes de :
- hissage du moteur,
- de mise en correspondance de la ferrure intermédiaire de palonnier et de la ferrure principale et des ferrures intermédiaires de bielle et des ferrures supplémentaires,
- d'insertion d'éléments de liaison mécaniques latéralement par rapport au plan moyen de reprise des efforts.

La présente invention a alors principalement pour objet un dispositif d'accrochage d'un moteur d'aéronef comportant une structure rigide et des moyens d'accrochage dudit moteur sur ladite structure rigide, lesdits moyens d'accrochage comportant un dispositif de reprise des efforts de poussée générés par le moteur, ledit dispositif de reprise des efforts comportant deux bielles liées mécaniquement à un palonnier au niveau d'une extrémité arrière par une première liaison mécanique, une ferrure principale fixée sur la structure rigide à laquelle est lié mécaniquement le palonnier, deux ferrures supplémentaires fixées sur la structure rigide auxquelles sont liées mécaniquement avec jeu les bielles, dans lequel les liaisons mécaniques entre le palonnier et la ferrure principale et entre les bielles et les ferrures supplémentaires comportent chacune un axe orthogonal à un plan moyen de transmission des efforts, l'axe de chacune des liaisons mécaniques étant l'axe d'insertion de chacune des dites liaisons mécaniques.

Le dispositif de reprise des efforts comporte une ferrure intermédiaire de palonnier reliant mécaniquement le palonnier à la ferrure principale, l'axe orthogonal au plan moyen de transmission des efforts traversant la ferrure intermédiaire de palonnier, et deux ferrures intermédiaires de bielles, chacune reliant mécaniquement les bielles aux ferrures supplémentaires, les axes orthogonaux au plan moyen de transmission des efforts traversant les ferrures intermédiaires de bielle.

Dans un exemple particulier de réalisation, les ferrures intermédiaires comportent des chapes recevant des pièces en saillie des ferrure principales et supplémentaires, les axes étant introduits dans des alésages pratiqués dans les chapes et les pièces en saillie.

Le jeu de la liaison mécanique entre les bielles et les ferrures supplémentaires est réalisé au niveau de liaison entre les extrémités arrières des bielles et les ferrures intermédiaires de bielle.

Chaque bielle est avantageusement reliée mécaniquement au palonnier par un axe et chaque bielle est reliée mécaniquement à une ferrure intermédiaire de bielle par le même axe. L'encombrement du dispositif est alors réduit, ainsi que sa masse.

Par exemple, les chapes supplémentaires sont fixées sur la structure rigide en avant de la ferrure principale.

Le palonnier peut être relié à la ferrure intermédiaire de palonnier par un axe orthogonal à l'axe entre la ferrure intermédiaire de palonnier et la ferrure principale.

La ferrure principale et les ferrures supplémentaires sont par exemple fixées par éclissage sur la structure rigide.

Le palonnier comporte avantageusement deux palonniers superposés et les axes comportent avantageusement un axe intérieur et un axe extérieur pour augmenter la sécurité du dispositif.

De manière avantageuse, la ferrure intermédiaire de palonnier est maintenue serrée sur la ferrure principale et / ou chaque ferrure intermédiaire de bielle est maintenue serrée sur la ferrure supplémentaire à laquelle elle est liée mécaniquement.

La ferrure intermédiaire de palonnier comporte, par exemple deux ailettes latérales recevant un boulon de traction vissé dans un écrou de serrage monté sur la ferrure principale. Ce montage serré permet de supprimer l'instabilité du montage de la ferrure intermédiaire de palonnier sur la ferrure principale.

Chaque ferrure intermédiaire de bielle est avantageusement maintenue serrée sur la ferrure supplémentaire associée au moyen d'un écrou de traction traversant la ferrure intermédiaire de bielle et se vissant dans la ferrure supplémentaire. Ce qui permet d'éliminer l'instabilité du montage de la ferrure intermédiaire de bielle sur la ferrure supplémentaire.

Le dispositif d'accrochage selon la présente invention peut comporter une attache moteur avant et une attache moteur arrière, le dispositif de reprise des efforts étant alors avantageusement disposé en avant de l'attache moteur arrière.

La présente invention a également pour objet un ensemble moteur comprenant un moteur et un dispositif d'accrochage du moteur, **caractérisé en ce que** ledit dispositif d'accrochage est un dispositif selon la présente invention.

La présente invention a également pour objet un aéronef comportant au moins un ensemble moteur selon la présente invention, assemblé sur une aile ou sur une partie arrière de fuselage de cet aéronef.

La présente invention a également pour objet un procédé de montage d'un moteur d'aéronef avec un dispositif d'accrochage selon la présente invention, comportant les étapes :
a) de hissage vertical du moteur en direction de la structure rigide,
b) de mise en correspondance des ferrures fixées sur la structure rigide et des ferrures solidaires du moteur,
c) de réalisation de liaisons mécaniques entre les ferrures fixées sur la structure rigide et les ferrures liées mécaniquement au moteur par brochage latéral des ferrures.

Le procédé selon l'invention peut comporter également une étape de fixation du moteur à ces attaches moteur avant et arrière, celle-ci ayant lieu avant ou après les étapes a) à c).

### BRÈVE DESCRIPTION DES DESSINS

La présente invention sera mieux comprise avec la description qui va suivre et les dessins en annexe, sur lesquels :
- la figure 1 représente une vue schématique générale de côté d'un ensemble moteur pour aéronef, comprenant un mât d'accrochage,
- la figure 2 est une vue en perspective de dessus d'un dispositif de reprise des efforts de poussée selon la présente invention,
- la figure 3A est une vue en éclaté de la figure 2,
- la figure 3B est une vue du dispositif de la figure 2 partiellement assemblé,
- la figure 4 est une vue de côté de détail du dispositif de reprise des efforts de la figure 2, au niveau de la fixation sur le caisson.

### EXPOSÉ DÉTAILLÉ DE MODES DE RÉALISATION PARTICULIERS

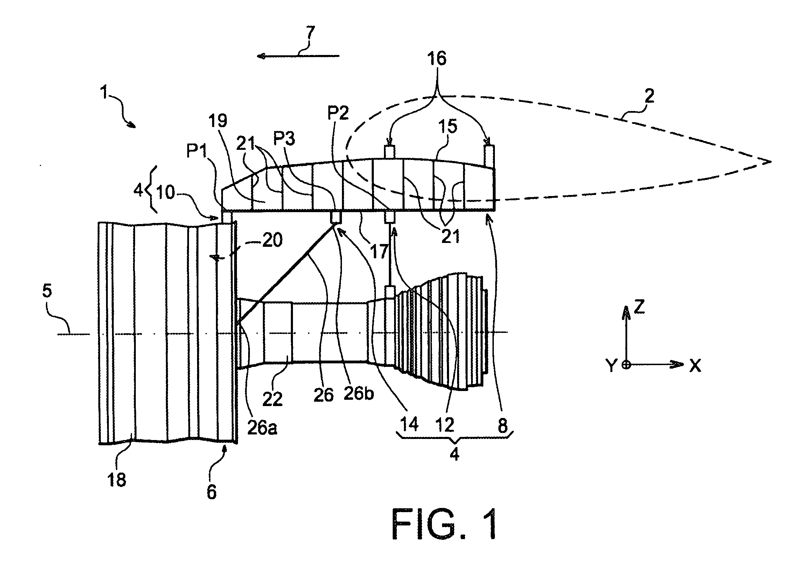

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un dispositif d'accrochage 4, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est à noter que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6 et à celle du dispositif 14. D'autre part, on appelle Y la direction orientée transversalement par rapport au dispositif 4 et également assimilable à la direction transversale du turboréacteur 6 et à celle du dispositif 14, est Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans cet exemple de réalisation de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est réalisé par l'assemblage d'un longeron supérieur 15, d'un longeron inférieur 17, et de deux longerons / panneaux latéraux 19 (un seul étant visible en raison de la vue de côté), ces éléments 15, 17, 19 étant raccordés entre eux par l'intermédiaire de nervures transversales 21 prenant chacune globalement la forme d'un rectangle. Ainsi, les nervures 21 s'étendent dans des plans YZ, les longerons 15, 17 s'étendent grossièrement dans des plans XY, et les panneaux latéraux 19 dans des plans XZ.

Les moyens d'accrochage comportent tout d'abord l'attache moteur avant 10 interposée entre une extrémité avant de la structure rigide 8, et une partie supérieure du carter de soufflante 18. Néanmoins, il serait également possible de prévoir que l'attache moteur avant 10 soit fixée sur un carter de liaison entre le carter central et le carter de soufflante, comme cela est connu de l'homme du métier. L'attache moteur avant 10, conçue de manière classique et connue de l'homme du métier, est fixée en un premier point P1 de la structure rigide 8, cette dernière étant également dénommée structure primaire.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1. Dans un exemple préféré de réalisation, le dispositif de reprise des efforts 14 est fixé au caisson en un troisième point P3, situé entre le premier point P1 et le second point P2.

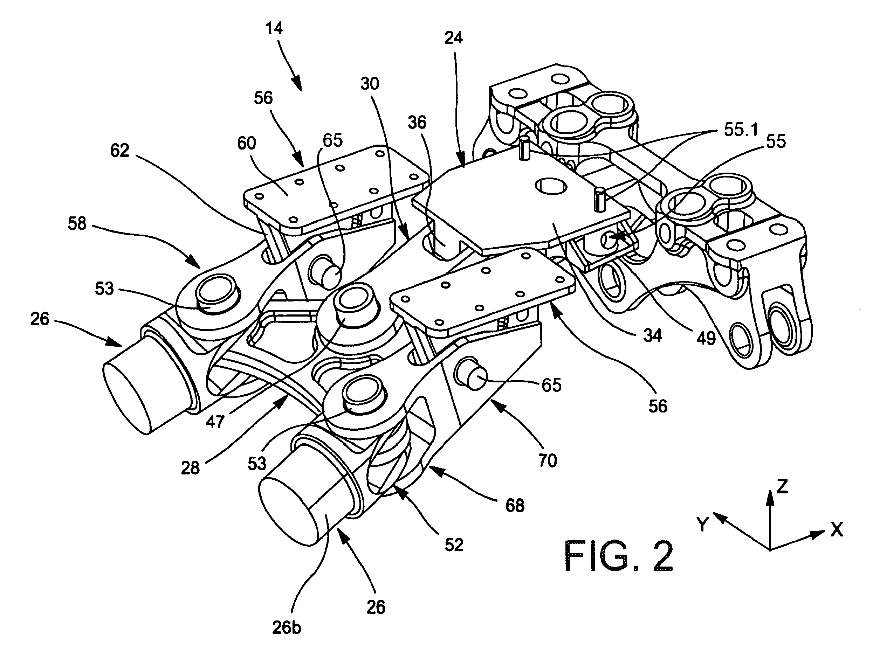

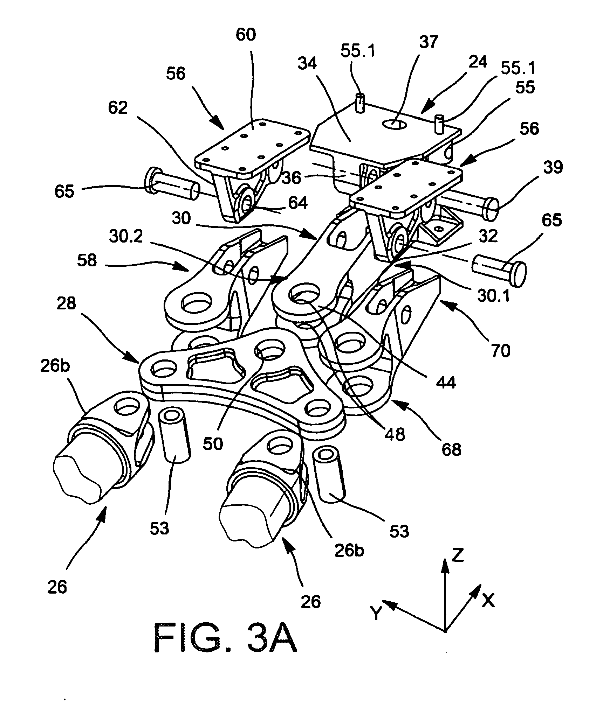

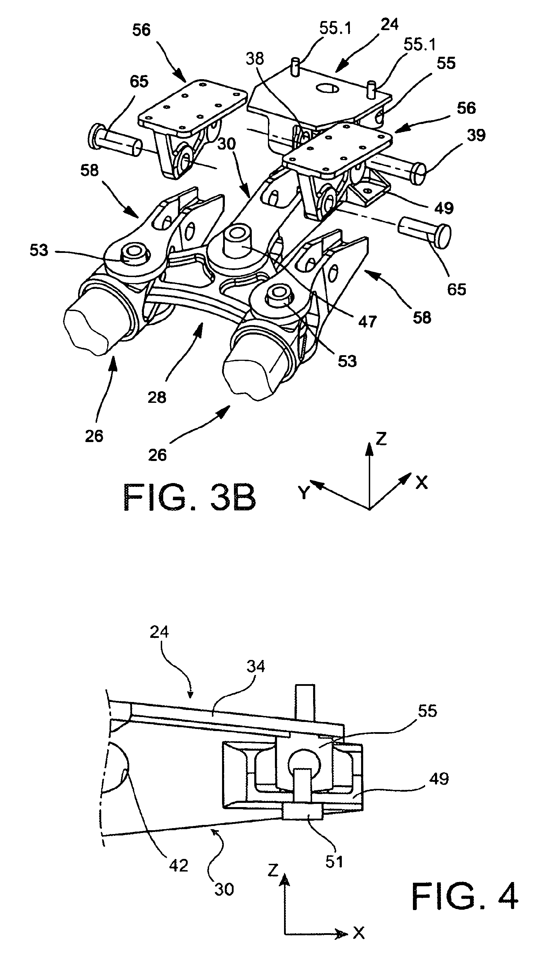

Le dispositif de reprise des efforts 14 représenté sur les figures 2, 3A et 3B comporte une ferrure principale 24 fixée sur une face inférieure du caisson, en particulier au longeron inférieur 17. Cette ferrure 24 est destinée à permettre la fixation mécanique de bielles 26 de reprise des efforts par l'intermédiaire d'un palonnier 28 sur le caisson 8.

Dans l'exemple représenté, le dispositif comporte un seul palonnier, la fonction fail-safe du palonnier étant réalisée par les ferrures supplémentaires 56, 58 qui seront décrites dans la suite de la description.

Cependant, on pourrait prévoir de mettre en oeuvre un palonnier double comme dans l'état de la technique.

Par exemple, la ferrure principale 24 est fixée par éclissage sur le longeron inférieur 17.

Dans la présente demande, on entend par plan moyen de reprise des efforts ou plan moyen de transmission des efforts, le plan de symétrie du dispositif de reprise des efforts s'étendant horizontalement et verticalement.

Dans l'exemple représenté, la ferrure principale 24 comporte une embase 34 fixée sur le longeron inférieur 17, par exemple par éclissage et une pièce 36 en saillie de cette embase 34 sensiblement orthogonalement à celle-ci, ladite pièce 36 étant contenue dans un plan parallèle au plan moyen de transmission des efforts et comportant un alésage 38 orthogonal audit plan. Cet alésage 38 reçoit un axe de liaison 39.

L'embase 36 comporte également un alésage 37 pour le passage d'un pion de poussée (non représenté) destiné à transmettre les efforts de la ferrure principale 24 au caisson 8. Le pion de poussée se trouve dans le plan moyen de reprise des efforts.

Dans un exemple de réalisation de la présente invention, le dispositif comporte également une ferrure intermédiaire de palonnier 30 reliant mécaniquement le palonnier 28 à la ferrure principale 24.

La ferrure intermédiaire de palonnier 30 comporte à une première extrémité arrière 30.1 une chape 32, dont les deux branches sont sensiblement verticales et reçoivent la pièce en saillie 36 de la ferrure principale 24.

Chaque branche de la chape 32 comporte un alésage (non visible) destiné à venir en regard de l'alésage 38 de la pièce 36 pour permettre le montage de l'axe 39 orthogonalement à la pièce 36 et à la chape 32.

La ferrure intermédiaire 30 de palonnier comporte à une deuxième extrémité avant 30.2 une autre chape 44 recevant le palonnier 28.

La liaison mécanique entre la ferrure intermédiaire de palonnier 30 et le palonnier 28 est réalisée au moyen d'un axe 47 (visible sur la figure 3B) monté dans des alésages 48 pratiqués dans les branches de la chape 44 et dans l'alésage 50 réalisé dans le palonnier 28.

Ce montage peut rendre la ferrure intermédiaire 30 instable, du fait de la possibilité de rotation autour de l'axe de brochage 47. Il est alors avantageusement prévu, pour supprimer ce risque d'instabilité, de maintenir serrer la ferrure intermédiaire 24 sur la ferrure principale 24.

Pour cela, la ferrure intermédiaire comporte, dans l'exemple représenté deux ailettes 49 s'étendant latéralement et orthogonalement par rapport au plan médian. Ces ailettes comportent chacune un alésage pour le passage d'un boulon de traction 51 vissé dans un écrou à barillet 55 solidaire de la ferrure principale 24, comme on peut le voir sur la figure 4.

Dans l'exemple représenté, l'embase 34 est fixée sur le caisson 8 par l'intermédiaire des extrémités 55.1 des écrous à barillet et de deux autres vis de traction (non représentées)

Dans l'exemple représenté, la chape 32 et la chape 44 de la ferrure intermédiaire sont orientées à 90° l'une par rapport à l'autre autour de l'axe X.

Les bielles 26 sont liées mécaniquement de manière symétrique sur le palonnier 28 de part et d'autre du plan moyen de transmission des efforts.

Chaque bielle 26 comporte à une extrémité longitudinale arrière 26b une chape 52 montée mobile en rotation sur une extrémité latérale du palonnier 28 par un axe 53.

Dans l'exemple représenté, l'axe reliant le palonnier 28 à la ferrure intermédiaire 30 de palonnier et l'axe reliant les bielles 26 au palonnier 28 sont parallèles.

Selon la présente invention, une liaison mécanique entre chaque bielle 26 et une ferrure supplémentaire 56 fixée sur le longeron inférieur 17 est également prévue. Cette liaison mécanique comporte un jeu pour ne pas la solliciter en fonctionnement normal, i.e. lorsque ni les bielles, ni le palonnier, ni leurs liaisons mécaniques ne sont dégradées.

Cette liaison mécanique est réalisée par une ferrure intermédiaire de bielle 58 reliant l'extrémité arrière 26b de la bielle 26 à la ferrure supplémentaire 56.

Dans l'exemple représenté, la ferrure supplémentaire 56 comporte une embase 60 de fixation au longeron inférieur 17, avantageusement en contact avec le longeron inférieure 17, et une pièce en saillie 62 perpendiculairement à cette embase 60 et parallèle au plan moyen de transmission des efforts et à la pièce en saillie 36 de la ferrure principale 24. L'embase 60 est par exemple fixée par éclissage au longeron inférieur 17, par exemple au moyen de huit vis de traction (non représentées), seuls les alésages pratiqués dans l'embase sont représentés.

Ces vis de traction forment également des vis de cisaillement, transmettant les efforts de poussée au caisson 8 en mode dégradé.

Cette pièce en saillie 62 comporte un alésage 64 pour le passage d'un axe 65.

La ferrure intermédiaire de bielle 58 comporte une première chape 68 à une extrémité avant et une deuxième chape 70 à une extrémité arrière.

Selon la présente invention, la deuxième chape 70 comporte des branches sensiblement verticales recevant la pièce en saillie 62 de la ferrure supplémentaire 56.

De manière avantageuse, pour supprimer l'instabilité de la ferrure intermédiaire de bielle 58 autour de son axe 65, il est prévu de manière similaire à la ferrure intermédiaire de bielle 30, de maintenir serrer la ferrure intermédiaire de bielle 58 sur la ferrure supplémentaire. Ce maintien serré est obtenu au moyen d'un boulon de traction sensiblement vertical monté dans un alésage pratiqué d'une paroi (non visibles) reliant les deux branches de la première chape 68 et se vissant dans la pièce en saillie 62 de la ferrure supplémentaire 56, la ferrure supplémentaire 56 jouant le rôle d'écrou à barillet.

La ferrure intermédiaire de bielle 58 et la ferrure supplémentaire 56 sont reliées mécaniquement par l'axe 65 inséré latéralement.

Dans l'exemple représenté, la première chape 68 est orientée à 90° par rapport à la deuxième chape 70.

La ferrure intermédiaire de bielle 58 est reliée à la bielle 26 par l'axe 53. De manière avantageuse, les axes reliant la bielle 26 au palonnier 28 et la bielle 26 à la ferrure intermédiaire de bielle 58 sont confondus, ce qui permet de simplifier le montage et de réduire la masse totale du dispositif d'accrochage.

Cependant on pourrait prévoir que ces deux axes soient distincts, par exemple l'axe reliant la bielle 26 à la ferrure intermédiaire de bielle 58 étant en arrière de l'axe 53 reliant la bielle 26 au palonnier 28.

Le jeu est réalisé au niveau de l'axe 53 entre chaque bielle 26 et la ferrure intermédiaire de bielle 58 associée.

Dans un exemple préféré de réalisation, tous les axes sont doubles, i.e. ils comportent chacun un axe intérieur et un axe extérieur, en cas de rupture de l'axe extérieur, les efforts sont transmis par l'axe intérieur. Ce type d'axe étant bien connu de l'homme du métier, celui-ci ne sera pas décrit plus en détail.

Dans l'exemple représenté, les ferrures supplémentaires 56 sont disposées latéralement en avant de la ferrure principale 24. Mais la ferrure principale 24 peut se situer en avant des ferrures supplémentaires 56 en fonction de la position du longeron inférieur 17 du caisson.

Selon la présente invention, les chapes des ferrures intermédiaire de palonnier 30 et de bielle 58 sont parallèles afin de permettre un montage par déplacement vertical du moteur muni des ferrures intermédiaires 30, 58, celles-ci venant alors entourer les ferrures principale 24 et supplémentaires 56.

Nous allons maintenant décrire le cheminement des efforts des bielles 26 vers le caisson 8 dans différents états des éléments du dispositif de reprise des efforts.

Lorsque le dispositif de reprise des efforts 14 selon l'invention est dans un état normal, i.e. qu'il n'y a pas de pièce endommagée, les efforts repris par les bielles 26, sont transmis au palonnier 28 par les axes 53, puis à la ferrure intermédiaire de palonnier 30 par l'axe 47, puis à la ferrure principale 24 par l'axe 39. Les efforts sont enfin repris par le caisson 8 auquel est fixée la ferrure principale 24 par l'intermédiaire du pion de poussée.

En cas de rupture d'une bielle 26, le palonnier 28 n'est plus dans une position équilibrée par rapport à l'axe, l'axe de la bielle 26 intacte vient en butée contre le contour de l'alésage de la ferrure intermédiaire de bielle 58, le palonnier 28 est alors stoppé en rotation. Les efforts provenant de la bielle 26 intacte, sont transmis au palonnier 28 et à la ferrure intermédiaire de bielle 58, qui respectivement transmettent les efforts à la ferrure principale 24 et à la ferrure supplémentaire 56. Les efforts sont ensuite transmis au caisson 8 par les vis de traction fixant les ferrures supplémentaires sur le caisson 8.

En cas de rupture du palonnier 28, les deux bielles 26 transmettent les efforts de poussée directement aux ferrures supplémentaires 56, 58, qui les transmettent au caisson 8. Dans ce cas de figure, la ferrure intermédiaire 30 et la ferrure principale ne sont pas sollicitées.

Ainsi, le dispositif de reprise des efforts selon la présente invention offre une fonction dite fail-safe, tout en permettant un montage facilité du moteur sur le caisson.

Nous allons maintenant décrire le procédé de montage du moteur sur le caisson, plus particulièrement le montage au niveau du dispositif de reprise des efforts.

La ferrure principale 24 et les ferrures supplémentaires 56 sont préalablement fixées sur le caisson 8, en particulier sur le longeron inférieur 17, la ferrure principale 24 est disposée sur le plan moyen de reprise des efforts et les ferrures supplémentaires 56 sont disposées de part et d'autre de la ferrure principale 24 et décalées axialement en avant de celle-ci, les axes des alésages des ferrures principale 24 et supplémentaires 56 étant sensiblement parallèles.

Les bielles 26 de reprise des efforts sont fixées par une extrémité avant 26a sur le moteur, en particulier sur le carter de soufflante et liées au niveau de leur extrémité arrière 26b au palonnier 28 et aux ferrures intermédiaires de bielles 58, le palonnier 28 étant lui-même lié mécaniquement à la ferrure intermédiaire de palonnier 30.

Les étapes de montage du moteur sur le caisson 8 sont les suivantes :
- hissage du moteur en direction du palonnier 28,
- mise en correspondance de la ferrure intermédiaire de palonnier 30 avec la ferrure principale 24, et mise en correspondance des ferrures intermédiaires de bielle 58 avec les ferrures supplémentaires 56,
- insertion latérale d'un élément de liaison mécanique entre la ferrure intermédiaire de palonnier 30 et la ferrure principale 24, et d'un élément de liaison mécanique entre chacune des ferrures intermédiaires de bielle 58 avec une ferrure supplémentaire 56, pour réaliser les liaisons mécaniques.

Les boulons de traction sont mis en place après la mise en place des axes latéraux.

Avant ou après ces étapes, on effectue la fixation du moteur sur l'attache moteur arrière 12 et sur l'attache moteur avant 10.

Le montage est donc simple, ne nécessite pas d'outil particulier, puisque la mise en place des éléments de liaison se fait par le côté du caisson et non par le dessus comme dans l'état de la technique.

Cet assemblage par un côté du dispositif de reprise des efforts permet de réduire l'espace nécessaire entre le caisson et le moteur, celui-ci peut alors être rapproché du moteur. Ainsi la mise en oeuvre de moteur de plus grand diamètre permet toujours de réduire les impacts de garde au sol, comme dans le cas de la mise en oeuvre de moteurs de diamètre plus petit comportant des dispositifs de reprise des efforts de l'état de la technique.

Le dispositif de reprise des efforts représenté sur les figures 2 et 3 vient d'être décrit uniquement à titre d'exemple et non limitatif. Des modifications pourront être apportées sans sortir du cadre de l'invention. Par exemple, les liaisons mécaniques entre les bielles, le palonnier et les ferrures intermédiaires de bielle pourraient être réalisées de manière différente. On pourrait prévoir notamment que la chape de l'extrémité arrière de chaque bielle soit montée à l'intérieur de la chape de la ferrure intermédiaire de bielle. Par ailleurs, on pourrait prévoir que les chapes soit portées par les ferrures fixés sur le longeron inférieur, les ferrures intermédiaire pénétrant alors dans ces chapes.

On pourrait également envisager que la ferrure principale 24 et les ferrures supplémentaires 56 forment une seule pièce, facilitant la fixation sur le caisson 8.

## Revendications

1. Dispositif d'accrochage d'un moteur d'aéronef comportant une structure rigide et des moyens d'accrochage dudit moteur sur ladite structure rigide, lesdits moyens d'accrochage comportant un dispositif (14) de reprise des efforts de poussée générés par le moteur, ledit dispositif de reprise des efforts (14) comportant deux bielles (26) liées mécaniquement à un palonnier (28) au niveau d'une extrémité arrière (26b) par une première liaison mécanique, une ferrure principale (24) fixée sur la structure rigide à laquelle est lié mécaniquement le palonnier (28), deux ferrures supplémentaires (56.) fixées sur la structure rigide auxquelles sont liées mécaniquement avec jeu les bielles (26), dans lequel les liaisons mécaniques entre le palonnier (28) et la ferrure principale (24) et entre les bielles (26) et les ferrures supplémentaires (56) comportent chacune un axe orthogonal à un plan moyen de transmission des efforts, l'axe de chacune des liaisons mécaniques étant l'axe d'insertion de chacune des dites liaisons mécaniques, le dispositif de reprise des efforts (14) comportant également une ferrure intermédiaire de palonnier (30) reliant mécaniquement le palonnier (28) à la ferrure principale (24), l'axe orthogonal au plan moyen de transmission des efforts traversant la ferrure intermédiaire de palonnier (30), et deux ferrures intermédiaires dé bielles (58), chacune (58) reliant mécaniquement les bielles (26) aux ferrures supplémentaires (56), les axes orthogonaux au plan moyen de transmission de efforts traversant les ferrures intermédiaires de bielle (58).

2. Dispositif d'accrochage d'un moteur d'aéronef selon la revendication 1, dans lequel les ferrures intermédiaires de palonnier (30) et de bielle (58) comportent des chapes (32, 70) recevant des pièces (36, 62) en saillie des ferrures principale (24) et supplémentaires (56), les axes étant introduits dans des alésages pratiqués dans les chapes (32, 70) et les pièces en saillie (36, 62).

3. Dispositif d'accrochage d'un moteur d'aéronef selon la revendication 1 ou 2, dans lequel 1e jeu de la liaison mécanique entre les bielles (26) et les ferrures supplémentaires (56) est réalisé au niveau de liaison entre les extrémités arrières (26b) des bielles (26) et les ferrures intermédiaires de bielle (58).

4. Dispositif d'accrochage d'un moteur d'aéronef selon l'une des revendications 1 à 3, dans lequel chaque bielle (56) est reliée mécaniquement au palonnier (28) par un axe et dans lequel chaque bielle (26) est reliée mécaniquement à une ferrure intermédiaire de bielle (58) par le même axe.

5. Dispositif d'accrochage selon l'une quelconque des revendications 1 à 4, dans lequel la ferrure intermédiaire de palonnier (30) est maintenue serrée sur la ferrure principale (24) et/ou chaque
ferrure intermédiaire de bielle (58) est maintenue serrée sur la ferrure supplémentaire (56) à laquelle elle est liée mécaniquement.

6. Dispositif d'accrochage selon l'une des revendications 1 à 5, comportant une attache moteur avant (10) et une attache moteur arrière (12), le dispositif de reprise des efforts étant disposé en avant de l'attache moteur arrière (12).

7. Ensemble moteur comprenant un moteur (6) et un dispositif d'accrochage (4) du moteur (6), **caractérisé en ce que** ledit dispositif d'accrochage est un dispositif selon l'une quelconque des revendications précédentes.

8. Aéronef comportant au moins un ensemble moteur selon la revendication 7, assemblé sur une aile ou sur une partie arrière de fuselage de cet aéronef.

9. Procédé de , montage d'un moteur d'aéronef avec un dispositif d'accrochage selon l'une des revendications 1 à 6, comportant les étapes :
a) de hissage vertical ,du moteur en direction de la structure rigide,
b) de mise en correspondance des ferrures fixées sur la structure rigide et des ferrures solidaires du moteur,
c) de réalisation de liaisons mécaniques entre les ferrures fixées sur la structure rigide et, les ferrures liées mécaniquement au moteur par brochage latéral des ferrures.

## Claims

1. Attachment device for an aircraft engine which includes a rigid structure and means of attachment of said engine to said rigid structure, where said means of attachment include a load reacting device (14) for the thrust generated by the engine, where said load reacting device (14) includes two link rods (26) which are mechanically connected to a balance beam (28) at a rear end (26b) by a first mechanical connection, a main fitting (24) which is fixed to the rigid structure to which the balance beam (28) is mechanically connected, two additional fittings (56) fixed to the rigid structure to which the link rods (26) are mechanically connected with play, in which the mechanical connections between the balance beam (28) and the main fitting (24) and between the link rods (26) and the additional fittings (56) each include a pin which is orthogonal to a force transmission mid-plane, where the pin for each of the mechanical connections is the insertion pin for each of said mechanical connections, where the load reacting device (14) also includes an intermediate balance beam fitting (30) which mechanically connects the balance beam (28) to the main fitting (24), where the pin which is orthogonal to the force transmission mid-plane passes through the intermediate fitting of the balance beam (30), and two link rod (58) intermediate fittings, each (58) mechanically connecting the link rods (26) to the additional fittings (56), where the pins which are orthogonal to the force transmission mid-plane pass through the link rod (58) intermediate fittings.

2. Attachment device for an aircraft engine according to claim 1, in which the balance beam (30) intermediate fittings and link rod (58) intermediate fittings include forks (32, 70) which hold parts (36, 62) which protrude from the main fittings (24) and additional fittings (56), where the pins are introduced into bores made in the forks (32, 70) and the protruding parts (36, 62).

3. Attachment device for an aircraft engine according to claim 1 or 2, in which the play in the mechanical connection between the link rods (26) and the additional fittings (56) is made at the connection between the rear ends (26b) or the link rods (26) sand the link rod intermediate fittings (58).

4. Attachment device for an aircraft engine according to one of claims 1 to 3, in which each link rod (56) is mechanically connected to the balance beam (28) by a pin and in which each link rod (26) is mechanically connected to a link rod intermediate fitting (58) by the same pin.

5. Attachment device according to any one of claims 1 to 4, in which the balance beam intermediate fitting (30) is clamped on the main fitting (24) and / or each link rod intermediate flitting (58) is clamped on the additional fitting (56) to which it is mechanically connected.

6. Attachment device according to one of claims 1 to 5, which includes a forward engine attachment member (10) and a rear engine attachment member (12), where the load reacting device is arranged forward of the rear engine attachment member (12).

7. Engine assembly which includes an engine (6) and an engine attachment device (4), **characterised by** the fact that said attachment device is a device according to any one of the preceding claims.

8. Aircraft which includes at least one engine assembly according to claim 7, assembled onto a wing or onto a rear part of the fuselage of this aircraft.

9. Method for mounting an aircraft engine with an attachment device according to one of claims 1 to 6, which includes steps for:
a) vertical hoisting of the engine towards the rigid structure,
b) alignment of the fittings fixed to the rigid structure and of the fittings firmly attached to the engine,
c) the realisation of mechanical connections between the fittings fixed to the rigid structure and the fittings which are mechanically connected to the engine by lateral pinning of the fitting

## Patentansprüche

1. Befestigungsvorrichtung für ein Luftfahrzeugtriebwerk, umfassend eine starre Struktur und Mittel zur Befestigung des Triebwerks an der starren Struktur, wobei die Befestigungsmittel eine Vorrichtung (14) zur Aufnahme von durch das Triebwerk erzeugten Schubkräften aufweisen, wobei die Vorrichtung zur Aufnahme von Kräften (14) zwei Stangen (26), die über eine erste mechanische Verbindung auf der Höhe eines Hinterendes (26b) mechanisch mit einer Traverse (28) verbunden sind, einen an der starren Struktur befestigten Hauptbeschlag (24), mit dem die Traverse (28) mechanisch verbunden ist, zwei an der starren Struktur befestigte Hilfsbeschläge (56), mit denen die Stangen (26) mechanisch mit einem Spiel verbunden sind, aufweist, wobei die mechanischen Verbindungen zwischen der Traverse (28) und dem Hauptbeschlag (24) und zwischen den Stangen (26) und den Hilfsbeschlägen (56) jeweils eine Achse aufweisen, die orthogonal zu einer Mittelebene der Kraftübertragung ist, wobei die Achse jeder der mechanischen Verbindungen die Einführungsachse jeder der mechanischen Verbindungen ist, wobei die Vorrichtung zur Aufnahme von Kräften (14) auch einen Traversenzwischenbeschlag (30), der die Traverse (28) mit dem Hauptbeschlag (24) mechanisch verbindet, wobei die zur Mittelebene der Kraftübertragung orthogonale Achse durch den Traversenzwischenbeschlag (30) hindurchgeht, und zwei Stangenzwischenbeschläge (58), die jeweils (58) die Stangen (26) mit den Hilfsbeschlägen (56) mechanisch verbinden, wobei die zur Mittelebene der Kraftübertragung orthogonalen Achsen durch die Stangenzwischenbeschläge (58) hindurchgehen, aufweist.

2. Befestigungsvorrichtung für ein Luftfahrzeugtriebwerk nach Anspruch 1, wobei die Traverse- (30) und Stangenzwischenbeschläge (58) Gabelköpfe (32, 70) aufweisen, die vom Hauptbeschlag (24) und den Hilfsbeschlägen (56) vorspringende Teile (36, 62) aufnehmen, wobei die Achsen in Aufbohrungen eingeführt sind, die in den Gabelköpfen (32, 70) und den vorspringenden Teilen (36, 62) ausgeführt sind.

3. Befestigungsvorrichtung für ein Luftfahrzeugtriebwerk nach Anspruch 1 oder 2, wobei das Spiel der mechanischen Verbindung zwischen den Stangen (26) und den Hilfsbeschlägen (56) auf der Höhe der Verbindung zwischen den Hinterenden (26b) der Stangen (26) und den Stangenzwischenbeschlägen (58) realisiert ist.

4. Befestigungsvorrichtung für ein Luftfahrzeugtriebwerk nach einem der Ansprüche 1 bis 3, wobei jede Stange (56) über eine Achse mit der Traverse (28) mechanisch verbunden ist und wobei jede Stange (26) über die gleiche Achse mit einem Stangenzwischenbeschlag (58) mechanisch verbunden ist.

5. Befestigungsvorrichtung nach einem der Ansprüche 1 bis 4, wobei der Traversenzwischenbeschlag (30) an den Hauptbeschlag (24) gedrückt gehalten wird und/oder jeder Stangenzwischenbeschlag (58) an den Hilfsbeschlag (56), mit dem er mechanisch verbunden ist, gedrückt gehalten wird.

6. Befestigungsvorrichtung nach einem der Ansprüche 1 bis 5, die eine vordere Triebwerkaufhängung (10) und eine hintere Triebwerkaufhängung (12) aufweist, wobei die Vorrichtung zur Aufnahme von Kräften vor der hinteren Triebwerkaufhängung (12) angebracht ist.

7. Triebwerkanordnung, die ein Triebwerk (6) und eine Befestigungsvorrichtung (4) für das Triebwerk (6) umfaßt, **dadurch gekennzeichnet, dass** die Befestigungsvorrichtung eine Vorrichtung nach einem der vorhergehenden Ansprüche ist.

8. Luftfahrzeug, das mindestens eine Triebwerkanordnung nach Anspruch 7 aufweist, die an einer Tragfläche oder einem hinteren Teil des Rumpfs dieses Luftfahrzeugs angeordnet ist.

9. Verfahren zur Anbringung eines Luftfahrzeugtriebwerks mit einer Befestigungsvorrichtung nach einem der Ansprüche 1 bis 6, umfassend die Schritte:
a) vertikales Hochziehen des Triebwerks in Richtung der starren Struktur,
b) entsprechendes Ausrichten der an der starren Struktur befestigten Beschläge und der mit dem Triebwerk verbundenen Beschläge,
c) Realisieren mechanischer Verbindungen zwischen den an der starren Struktur befestigten Beschlägen und den mechanisch mit dem Triebwerk verbundenen Beschlägen durch Verbinden der Beschläge von der Seite.
